(19) **Europäisches Patentamt**
**European Patent Office**
**Office européen des brevets**

(11) **EP 4 287 073 A1**

(12) **EUROPEAN PATENT APPLICATION**

(43) Date of publication:
**06.12.2023 Bulletin 2023/49**

(21) Application number: **22182588.8**

(22) Date of filing: **01.07.2022**

(51) International Patent Classification (IPC):
**G06N 3/04** *(2023.01)* **G06N 3/08** *(2023.01)*

(52) Cooperative Patent Classification (CPC):
**G06N 3/088; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2022 NL 2032027**

(71) Applicant: **NavInfo Europe B.V.**
**5657 DB Eindhoven (NL)**

(72) Inventors:
• **VARMA, Arnav**
  **Eindhoven (NL)**
• **ARANI, Elahe**
  **Eindhoven (NL)**
• **ZONOOZ, Bahram**
  **Eindhoven (NL)**

(74) Representative: **van Breda, Jacobus**
**Octrooibureau Los & Stigter B.V.**
**P.O. Box 20052**
**1000 HB Amsterdam (NL)**

Remarks:
Amended claims in accordance with Rule 137(2) EPC.

(54) **METHOD AND SYSTEM FOR DYNAMIC COMPOSITIONAL GENERAL CONTINUAL LEARNING**

(57)    A computer-implemented method for general continual learning combines rehearsal-based methods with dynamic modularity and compositionality. Concretely, the method aims at achieving three objectives: dynamic, sparse, and compositional response to inputs; competent application performance; and - reducing catastrophic forgetting. The proposed method can work without knowledge of taskidentities at test-time, it does not employ task-boundaries and it has bounded memory even when training on longer sequences.

Fig. 1

**Description**

CROSS-REFERENCE TO RELATED APPLICATIONS

This application claims priority to and the benefit of Netherland Patent Application No. 2032027, titled "METHOD AND SYSTEM FOR DYNAMIC COMPOSITIONAL GENERAL CONTINUAL LEARNING", filed on May 31, 2022, and the specification and claims thereof are incorporated herein by reference.

BACKGROUND OF THE INVENTION

Field of the Invention

The invention relates to a computer-implemented method and a system for dynamic compositional general continual learning of deep neural networks.

Background Art

In recent years, deep neural networks (DNNs) have achieved human-level performance in several applications [1][2]. These networks are trained on multiple tasks within an application with the data being received under an independent and identically distributed (i.i.d) assumption. This assumption is satisfied by shuffling the data from all tasks, and balancing and normalizing the samples from each task in the application [3]. Consequently, DNNs can achieve human-level performance on all tasks in these applications by modelling the joint distribution of the data as a stationary process. Humans, on the other hand, can model the world from inherently non-stationary and sequential observations [4]. Learning continually from the more realistic sequential and non-stationary data is crucial for many applications such as lifelong learning robots [5] and self-driving cars [6]. However, vanilla gradient-based training for such continual learning setups with a continuous stream of tasks and data leads to task interference in the DNN's parameters, and consequently, catastrophic forgetting on old tasks [7]. Therefore, there is a need for methods to alleviate task-interference and catastrophic forgetting in continual learning.

Lately, some works have aimed to address these challenges in continual learning. These can be broadly classified into the following categories:

- Regularization-based methods [8, 9, 10] that penalize changes to DNNs' parameters to reduce task interference, which is comparable to task-specific synaptic consolidation in the brain [11].
- Parameter-isolation methods [12, 13] that assign distinct subsets of parameters to different tasks to emulate modularity, compositionality, and sparsity in biological brains [3].
- Rehearsal-based methods [14, 15] that co-train on current and previous stored samples, mimicking the multi-scale association of past and present experiences in humans [16].

While these methods mitigate catastrophic forgetting to some extent, regularization-based and parameter isolation-based methods often fail on one or more of general continual learning (GCL) desiderata [17, 18] such as use of task-boundaries, requirement of task-identity of example at test time, and unconstrained growth or capacity depletion [17] of networks over a long sequence of tasks. Recent rehearsal-based methods [19, 20], however, adhere to the GCL desiderata, and outperform previous state-of-the-art methods.

Though rehearsal-based methods improve over other categories, they still suffer from catastrophic forgetting through task interference in the DNN parameters, as all parameters respond to all examples and tasks. This could be resolved by inculcating parameter-isolation in the rehearsal-based methods. However, it is worth noting that unlike parameter-isolation methods, compositionality and sparsity in the brain is not "static". There is evidence that the brain responds to stimuli in a dynamic and compositional manner, with different "modules" or subsets of neurons responding "dynamically" to different stimuli, often reusing many previously learnt components [21].

The advantages of dynamic and compositional response to stimuli have also been explored in deep learning in stationary settings through mechanisms such as gating of modules, early-exit, and dynamic routing, along with training losses that incentivize sparsity and consequent compositionality of neural activations. These works observed that DNNs trained to predict dynamically also learn to respond differently to different inputs. Furthermore, the learned DNNs demonstrate clustering of parameters in terms of "tasks" such as similarity, difficulty, and scale of inputs [22, 23, 24], indicating dynamic modularity and compositionality.

Network pruning [35], a popular method for compressing DNNs, can be seen as an indirect attempt at mimicking modularity and sparsity in the human brain, by extracting a sub-network of the DNN that is primarily responsible for the task at hand. Pruning is generally achieved through removing unimportant connections such as weights with low magnitudes - called unstructured pruning, or removing unimportant structures such as unimportant channels, filters, or layers - called structured pruning [35]. These approaches have achieved success in both i.i.d. as well as continual learning set-ups [37, 38]. However, the nature of modularity achieved through pruning is static, where all neurons react to every stimulus. Therefore, continual learning approaches which introduce "dynamic" sparsity still led to a static non-modular network where the network doesn't drop, reuse, and recompose different modules, instead using all parameters to respond to every input. Some methods [8, 36] try to control the amount of learning in important parameters, but this too results finally in a static non-modular network and falls directly or indirectly under the regularization-based approaches.

Recently, few works have introduced modularity and compositionality to continual learning setups. SG-F [25, 26], MNTDP [27], LMC [26], and MoE[28] follow approaches that expand the network in response to new tasks or outlier examples. To this end, they propose methods to initialize and project new modules in the existing feature spaces and accumulate and freeze old and consolidated information. However, these methods either use task-identities at test time or fail to perform convincingly on multiple complex datasets without the use of task-identities at test-time, and therefore cannot be considered as general continual learning algorithms. Furthermore, they require theoretically unconstrained network growth for continual learning over long sequences, which is proven to be unnecessary by the experimental results detailed later in this document, as even standard networks like ResNets [29] can learn complex datasets compositionally and modularly in the i.i.d. settings [22, 23, 24]. Abati et al. [30] starts with a standard ResNet but tries to remove convolutional filters dynamically by growing task-specific units at each convolutional layer (for each task), resulting in large growth of network size over long sequences. Additionally, they employ task-boundaries to freeze a few units based on the validation set, and thus require a much larger memory buffer for previous samples. Finally, Chen et al. [31] employs a constant-capacity network for online continual learning but starts continual training with a network that employs multiple residual blocks at every single layer, which is equivalent to training multiple ResNets, which as we argued earlier, is not necessary.

Note that this application refers to a number of publications. Discussion of such publications is given for more complete background and is not to be construed as an admission that such publications are prior art for patentability determination purposes.

BRIEF SUMMARY OF THE INVENTION

Embodiments of the present invention correct the short-comings of the prior art and provide a solution for dynamically compositional continual learning in deep neural networks. This will become apparent from the following disclosure directed to a computer-implemented method for general continual learning in deep neural networks, a data processing system, and a computer-readable medium, having the features of one or more of the appended claims.

In a first aspect of the invention, the computer-implemented method for general continual learning in deep neural networks maintains a standard network through training and adheres to general continual learning desiderata i.e. it can work without knowledge of task-identities at test-time, it does not employ task-boundaries and it has bounded memory even when training on longer sequences. Said computer-implemented method for general continual learning in deep neural networks, comprises the steps of:

- providing a structure of said deep neural networks comprising a plurality of convolutional layers; and
- providing a memory buffer for storing data of network predictions,

wherein, for each layer, the method comprises the steps of:

- selecting an input sample from current data and/or from data stored in the memory buffer;
- building at least one agent as self-attention network, wherein said at least one agent is arranged for processing said input sample to said layer and for emitting as many outputs as activations in said layer;
- converting said outputs into probabilities;
- converting said probabilities into binary actions to keep or to drop each activation using Bernoulli sampling;
- rewarding the agent for using the activation when the network prediction is correct and penalizing the agent for using the activation when the network prediction is incorrect while incentivizing the retention of a desired ratio of activations at each layer.

For mitigating catastrophic forgetting, the method comprises the step of maintaining a constant-size memory buffer by updating said memory buffer using reservoir sampling. In particular, the step of updating said memory buffer is applied exclusively when the network predictions are correct.

In order to ensure that all activation information at the location is removed when the neural network structure comprises a batch normalization layer, the method comprises the step of applying actions after said batch normalization layer.

Advantageously, the method comprises the step of providing a neural network wherein the structure of said neural network comprises a ResNet architecture. In particular, the method comprises the step of providing a neural network wherein the structure of said neural network comprises four blocks wherein the agents of the self-attention network are linked to the convolutional layers of the last three of said blocks, wherein each block comprises two residual blocks and wherein each residual block comprises two convolutional layers. Additionally, the method comprises the step of removing channels from the outputs of the convolutional layers.

In order to reach the self-attention, the method comprises the steps of:

- estimating a channel-length representation by using pointwise convolution, batch normalization, and global average pooling;
- sending said estimated channel-length representation through a multilayer perceptron with one hidden layer and Sigmoid activation; and
- multiplying said estimated channel-length representation with the original channel-length representation.

The size of the hidden layer is preferably between channels /8 and channels /64, more preferably, the size of the hidden layer is channels /16.

Preferably, the method comprises the step of using a Sigmoid with a temperature. The temperature serves the purpose of tuning the range of outputs of the self-attention layers, ensuring that the probabilities being sampled from to pick the action aren't too small and that enough activations are picked to enable learning.

The method comprises the step of calculating at least one task loss ($L_T$) wherein a cross-entropy loss is minimized and applied on current data and on data stored in the memory buffer. Task losses seek to enhance performance on the task or application, which is the primary objective of training the network. Image classification is a preferred application of the current invention; therefore, the current invention is preferably embodied such as a cross-entropy loss is minimized. These losses are applied on both current as well as memory samples.

$$L = L_T(\text{inputs}) = CE(X, Y)$$

where, CE refers to a standard cross-entropy function, and X and Y refer to the input image and corresponding label respectively.

Furthermore, aiming at providing a good sparsity-accuracy trade-off, the method comprises the step of calculating, for each agent, at least one agent loss comprising a reward function and a corresponding policy gradient loss, wherein the reward function comprises the steps of:

- rewarding the agent for using the activation when the network prediction is correct; and
- penalizing the agent for using the activation when the network prediction is incorrect,
- incentivizing the retention of a desired ratio of activations at each layer, and wherein the corresponding policy gradient loss comprises the steps of:
- passing an input of the layer through the self-attention network for providing an output of same size as the number of activations in said layer;
- using a probability layer for converting said output into probabilities;
- converting said probabilities into binary actions to keep or to drop each activation using Bernoulli sampling;
- multiplying said actions by the activations in order to remove the activations to be dropped.

The method comprises the step of calculating at least two consistency losses applied on final representations of the network and on sub-networks of the agent, wherein for each consistency loss a mean squared error loss is minimized for enforcing consistency. Consistency losses seek to impose consistency between replayed and memory/saved representations, thereby mitigating forgetting of soft knowledge.

The method comprises the step of calculating at least one prototype loss wherein a ratio of pairwise mean squared errors between representations of same classes to pairwise mean squared errors between representations from different classes is minimized, and wherein said prototype loss is applied on current data and on data stored in the memory buffer. Prototype losses incentivize the learning of input-adaptive class prototypes by pulling final representations from agent subnetworks together when they are from the same class and pushing them away from each other when they are from different classes.

The method comprises the step of calculating at least one exploration loss wherein, for each agent, an entropy of action probabilities is maximized and wherein said exploration loss is applied on current data. Exploration losses seek to "explore" the solution space, and therein avoid activating the same units repeatedly.

The method comprises the step of calculating a total loss function for achieving continual learning by providing a weighted sum of the at least one task loss, the at least one agent loss, the at least one consistency loss, the at least one prototype loss, and the at least one exploration loss.

The method comprises the step of multiplying the at least one exploration loss with a weight smaller than a weight of the at least one task loss, a weight of the at least one agent loss, a weight of the at least two consistency losses, and a weight of the at least one prototype loss. The exploration losses always use a small weight as too much exploration can hinder learning itself.

In order to give the agents a better search space when they start searching for a solution, the method comprises the step of establishing a warmup stage of training for a plurality of initial epochs of a first task, wherein the at least one task loss is exclusively applied on current data and wherein remaining losses are excluded.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the data processing system comprise a computer loaded with a computer program wherein said program is arranged for causing the computer to carry out the steps of the computer-implemented method according to any one of aforementioned steps.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:

Figure 1 shows a schematic diagram for the computer-implemented method according to an embodiment of the present invention.

Figure 2 shows graphical application results of the method according to an embodiment of the present invention.

Whenever in the figures the same reference numerals are applied, these numerals refer to the same parts.

DETAILED DESCRIPTION OF THE INVENTION

The proposed computer-implemented method for general continual learning combines rehearsal-based methods with dynamic modularity and compositionality. Concretely, the method aims at achieving three objectives:

- dynamic, sparse, and compositional response to inputs;
- competent application performance; and
- reducing catastrophic forgetting.

To achieve dynamic and compositional response to inputs, multiple agent subnetworks are defined in the DNN, each responsible for zeroing out activations of a layer, based on the input to that layer. The agents are rewarded for choosing actions that lower parameter utilization (sparse and compositional responses) if the network predictions are accurate but are penalized heavily for choosing actions that lead to inaccurate predictions. Furthermore, the representations that the agents sample actions from are incentivized to be pushed together for inputs from same classes, and pulled away for inputs from different classes, resulting in the learning of dynamic class prototypes in the agent subnetworks. To reduce forgetting and achieve competent task performance, we maintain a constant-size memory-buffer in which we store previously seen examples. The network is trained on current examples alongside previous examples to both maintain performance on current and previous tasks, as well as to make multi-scale associations of current and previous soft-knowledge.

The approach according to the current invention is divided into two components:

*Agents:*

Agents are built into the network structure such that the network tries to perform competently on the application while showcasing sparse responses for any given example. For any layer, the agent is a self-attention network which processes the input to that layer to emit as many outputs as activations in the layer. These outputs are converted into probabilities and sampled from as a Bernoulli distribution to decide corresponding binary actions, where 0 means dropping the corresponding activation and 1 means using the corresponding activation. Therefore, across the network, there are multiple agents, each of which tries to induce sparsity and modularity locally by zeroing out activations, while they all co-operate to achieve competent application-performance globally. In practice, the actions are applied after the batch normalization layer, if any, to ensure all activation information at the location is removed.

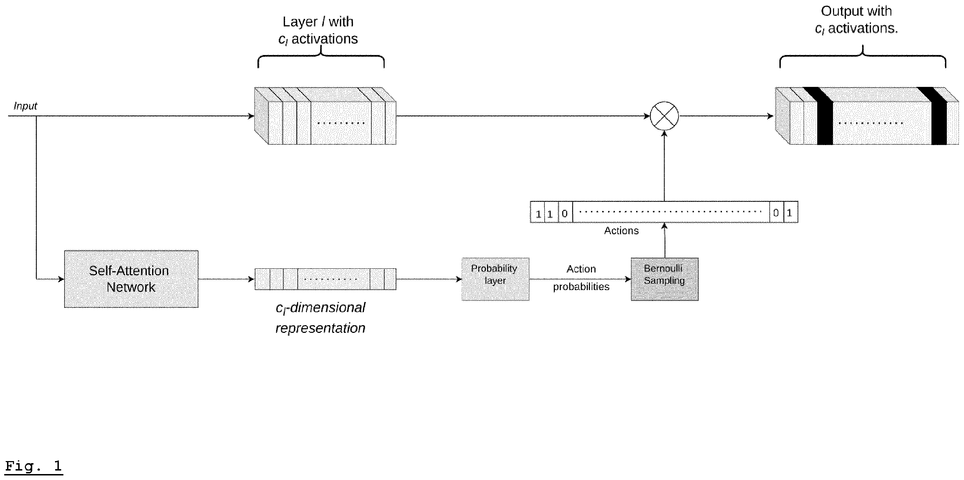

Embodiments of the present invention are preferably embodied such as the network is a ResNet-18 with agents corresponding to the convolutional layers of the last 3 of the 4 blocks, with each block containing 2 residual blocks with 2 convolutional layers each, resulting in 12 agents in total. While the agent can be used for any/all convolutional layers, no agent is used in the first block as it has been noted that earlier layers undergo minimal forgetting [34], are highly transferrable [33], and get used for most examples even when learned with dynamic modularity [30]. These agents then remove activations (channels) from the convolutional layer's outputs as discussed earlier. However, as the residual connections in ResNet retain the activation information removed by the agents, the agent is applied for the second (i.e. final) convolutional layer in the block to the residual activations as well. The agent subnetworks (i.e. self-attention networks) use pointwise convolution, batch normalization, and global average pooling to get a channel-length representation, which is sent through a multilayer perceptron (MLP) with one hidden layer of size channels / 16 and Sigmoid activation, and then multiplied with the original channel-length representation to get the self-attention. The action probabilities are computed from the result of this self-attention operation using Sigmoid with a temperature. The temperature serves the purpose of tuning the range of outputs of the self-attention layers, ensuring that the probabilities being sampled from to pick the action aren't too small and that enough activations are picked to enable learning. The general structure of the agent at any given layer is shown in Figure 1.

*Losses:*

A variety of losses are used to achieve the objectives of sparsity and compositionality, competent application performance, and mitigating performance. A constant-sized memory buffer is maintained and is updated using reservoir sampling [32], which helps approximate global data distribution in the buffer, without the use of task-boundaries. To be noted that in this embodiment, the memory buffer is only updated if the predictions were made correctly. At any given time during training, data is sampled once from the current data stream as well as from the memory buffer.

In detail, the following losses may be used separately or in combination:

  a. Task Losses ($L_T$): Losses that seek to enhance performance on the task or application, which is the primary objective of training the network. Image classification is a preferred application of the current invention; therefore, the method of the current invention preferably comprises the step of calculating the at least one task loss wherein a cross-entropy loss is minimized. The at least one task loss is applied on both current as well as memory samples.

$$L = L_T(\text{inputs}) = CE(X, Y)$$

  where, CE refers to a standard cross-entropy function, and X and Y refer to the input image and corresponding label respectively.

  b. Agent losses ($L_r$): Sparsity-Accuracy trade-off for agents, defined through a reward function and corresponding policy gradient losses. In a preferred embodiment of the invention, at any agent $l$, the Reward function is defined as:

$$R_l = \begin{cases} kr - \mathbb{E}_l[a_{l,i}], & \text{if correct} \\ -\lambda(kr - \mathbb{E}_l[a_{l,i}]), & \text{otherwise} \end{cases}$$

  where $a_{l,i}$ refers to the use/drop binary action taken at the $i^{th}$ activation of the $l^{th}$ layer, and $\lambda > 0$ is a penalty imposed on incorrect predictions, $k_r$ is a keep ratio for the ratio of activations we wish to retain at each layer.
  This results in the following policy-gradient loss to be minimized:

$$L_r = \mathbb{E}_l \mathbb{E}_\pi [-R_l \log \pi_l(a_l)]$$

$$= \mathbb{E}_l \mathbb{E}_\pi \left[-R_l \log \prod_{i=1}^{c_l} p_{l,i} a_{l,i} + (1 - p_{l,i})(1 - a_{l,i})\right]$$

$$= \mathbb{E}_l \mathbb{E}_\pi \left[-R_l \sum_{i=1}^{c_l} \log[p_{l,i} a_{l,i} + (1 - p_{l,i})(1 - a_{l,i})]\right]$$

where, $p_{l,i}$ is the $i^{\text{th}}$ probability released by the $l$th probability layer (see Figure. 1, a Sigmoid with temperature preferably), the $a_{l,i}$ are same as referred to in the reward description, and $\pi$ refers to the agent sampling policy, which as discussed earlier is based on Bernoulli sampling. These losses are applied on both memory as well as current samples.

c. Consistency Losses ($L_C$): Losses that seek to impose consistency between replayed and memory/saved representations, thereby mitigating forgetting of soft knowledge. These losses are applied on final representations of the network as well as the agent sub-networks. In a preferred embodiment of the current invention, a mean squared error (MSE) loss is used for enforcing consistency. These losses are naturally applied on the memory samples.

$$L_C(Y_S', Y_R') = MSE(Y_S', Y_R')$$

where, the subscripts S and R refer to saved (i.e. from memory buffer) and replayed (i.e. passed through the network again at current state) predictions, respectively.

d. Prototype Losses ($L_P$): Losses that incentivize the learning of input-adaptive class prototypes by pulling final representations from agent subnetworks together when they are from the same class and pushing them away from each other when they are from different classes. This loss will result in agent representations that correspond to class prototypes. In a preferred embodiment of the invention, a ratio of pairwise MSEs between representations of same classes to that from different classes is minimized as a prototype loss. These losses are applied on both current as well memory samples. Note that in our embodiment, we only consider those agent representations for this loss, which lead to accurate predictions on the task.

$$L_P(Y') = \frac{1 + MSE(\{Y_a', Y_b' : a, b \text{ are from same class}\})}{1 + MSE(\{Y_a', Y_b' : a, b \text{ are from different class}\})}$$

where, Y' is a set of predictions, and a and b are subscripts referring to samples from this set.

e. Exploration losses ($L_E$): Losses that seek to "explore" the solution space, and therein avoid activating the same units repeatedly. In a preferred embodiment of the invention, an entropy of action probabilities at each agent is maximized, which would make the probability distributions more "uniform" and would reduce the chances of using overactive units. As we only add samples to memory buffer when predictions are made correctly, these losses are only applied to current samples.

$$L_E = \frac{1}{L} \sum_l \sum_i p_{l,i} \log(p_{l,i})$$

where, L is the total numbers of layers on which agents act on i.e. total number of agents.

These losses are preferably used with a weighted sum to get the total loss for achieving continual learning. Note that the exploration losses always use a small weight as too much exploration can hinder learning itself.

$$L_{\text{total}} = L_T(X_B, Y_B) + w_e L_E(X_B) + \gamma L_r(X_B) + \beta[L_T(X_M, Y_M) + \gamma L_r(X_M)]$$
$$+ \alpha L_C(Y_S', Y_R') + \alpha_p L_C(Y_{A,S}', Y_{A,R}') + w_p[L_P(Y_B') + L_P(Y_R')]$$

where, the subscripts M, and B refer to samples from memory and buffer, respectively.

Subscripts S, A, and R refer to saved (i.e. from memory), agent (i.e. from the agent subnetworks), and replayed predictions (i.e. when memory sample is sent through network again). X is a batch of images, Y is a batch of labels, Y' is a batch of predictions. Agent predictions refers to the channel-attention vector on which probability layer is applied.

Additionally, the computer-implemented method according to the invention employs a warmup stage of training for the first few epochs of the first task, where only task losses on current samples are used for learning, to give the agents a better search space when they start searching for a solution (after warmup stage).

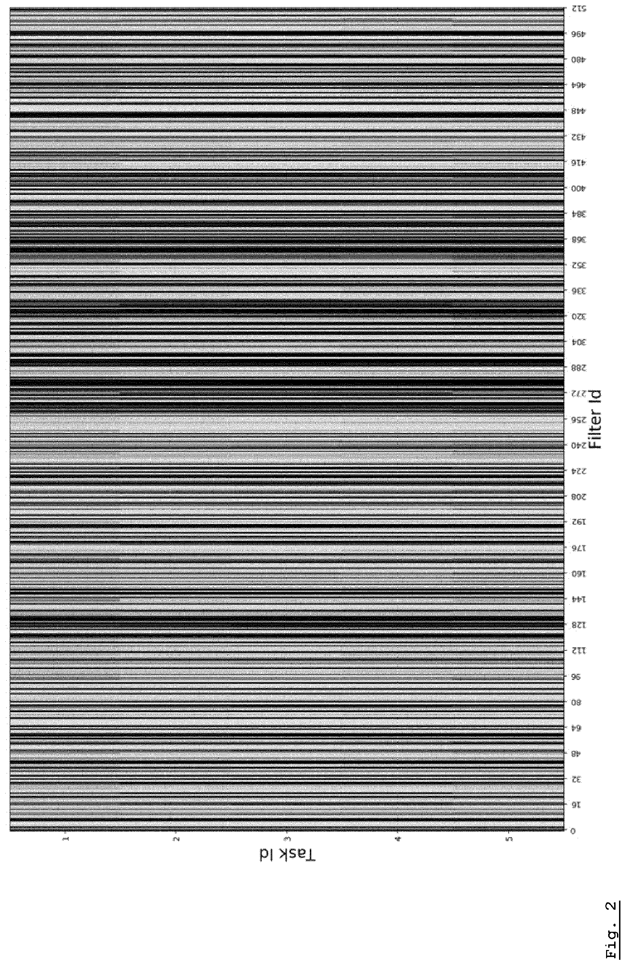

Induced sparsity at a convolutional layer can be seen in Figure 2 in terms of activation rates per task. Some tasks barely use some of the activations (dark shades), which is in contrast with methods like DER++ which use entire capacity to respond to each stimulus i.e. have a 100% activation rate.

Results on Sequential-CIFAR10 can be seen in Table 1, where the computer-implemented method according to the invention outperforms several state-of-the-art methods and performs close to DER++ while only using part of the capacity for each input, as evidenced by Figure 2.

**Table 1**

| Method | Sequential CIFAR-10 Performance |
|---|---|
| ER | 57.74 |
| GEM | 26.2 |
| iCaRL | 47.55 |
| FDR | 28.71 |
| GSS | 49.73 |
| OURS | 71.17 |
| DER++ | 72.70 |

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Embodiments of the present invention can include every combination of features that are disclosed herein independently from each other. Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Noah F Greenwald, Geneva Miller, Erick Moen, Alex Kong, Adam Kagel, Thomas Dougherty, Christine Camacho Fullaway, Brianna J Mcintosh, Ke Xuan Leow, Morgan Sarah Schwartz, et al. Whole-cell segmentation of tissue images with human-level performance using large-scale data annotation and deep learning. Nature biotechnology, pp. 1-11, 2021.

2. Yaniv Taigman, Ming Yang, Marc'Aurelio Ranzato, and Lior Wolf. Deepface: Closing the gap to human-level performance in face verification. In Proceedings of the IEEE conference on computer vision and pattern recognition, pp. 1701-1708, 2014

3. Raia Hadsell, Dushyant Rao, Andrei A Rusu, and Razvan Pascanu. Embracing change: Continual learning in deep neural networks. Trends in cognitive sciences, 24(12):1028-1040, 2020.

4. Robert M French. Catastrophic forgetting in connectionist networks. Trends in cognitive sciences, 3(4):128-135, 1999.

5. Thrun, S. and Mitchell, T.M., 1995. Lifelong robot learning. Robotics and autonomous systems, 15(1-2), pp.25-46.

6. Nose, Yohei, Akira Kojima, Hideyuki Kawabata, and Tetsuo Hironaka. "A study on a lane keeping system using CNN for online learning of steering control from real time images." In 2019 34th International Technical Conference on Circuits/Systems, Computers and Communications (ITC-CSCC), pp. 1-4. IEEE, 2019.

7. Michael McCloskey and Neal J Cohen. Catastrophic interference in connectionist networks: The sequential learning problem. In Psychology of learning and motivation, volume 24, pp. 109-165. Elsevier, 1989.

8. James Kirkpatrick, Razvan Pascanu, Neil Rabinowitz, Joel Veness, Guillaume Desjardins, Andrei A Rusu, Kieran Milan, John Quan, Tiago Ramalho, Agnieszka Grabska-Barwinska, et al. Overcoming catastrophic forgetting in neural networks. Proceedings of the national academy of sciences, 114(13):3521-3526, 2017.

9. Jonathan Schwarz, Wojciech Czarnecki, Jelena Luketina, Agnieszka Grabska-Barwinska, Yee Whye Teh, Razvan Pascanu, and Raia Hadsell. Progress & compress: A scalable framework for continual learning. In International Conference on Machine Learning, pp. 4528-4537. PMLR, 2018.

10. Friedemann Zenke, Ben Poole, and Surya Ganguli. Continual learning through synaptic intelligence. In International Conference on Machine Learning, pp. 3987-3995. PMLR, 2017.

11. Claudia Clopath, Lorric Ziegler, Eleni Vasilaki, Lars Büsing, and Wulfram Gerstner. Tag-trigger-consolidation: a model of early and late long-term-potentiation and depression. PLoS computational biology, 4(12):e1000248, 2008.

12. Yoon, J., Yang, E., Lee, J. and Hwang, S.J., 2017. Lifelong learning with dynamically expandable networks. arXiv preprint arXiv:1708.0154

13. Tameem Adel, Han Zhao, and Richard E. Turner. Continual learning with adaptive weights (CLAW). In 8th International Conference on Learning Representations, ICLR 2020, Addis Ababa, Ethiopia, April 26-30, 2020. OpenReview.net, 2020. URL https://openreview.net/forum?id=Hklso24Kwr.

14. David Lopez-Paz and Marc'Aurelio Ranzato. Gradient episodic memory for continual learning. In Advances in neural information processing systems, pp. 6467-6476, 2017.

15. Arslan Chaudhry, Marc'Aurelio Ranzato, Marcus Rohrbach, and Mohamed Elhoseiny. Efficient lifelong learning with A-GEM. In 7th International Conference on Learning Representations, ICLR 2019, New Orleans, LA, USA, May 6-9, 2019. OpenReview.net, 2019. URL https://openreview.net/forum?id=Hkf2_sC5FX.

16. Elahe Arani, Fahad Sarfraz, Bahram Zonooz. Learning Fast, Learning Slow: A General Continual Learning Method based on Complementary Learning System, Tenth International Conference on Learning Representations (ICLR, 2022).

17. Matthias Delange, Rahaf Aljundi, Marc Masana, Sarah Parisot, Xu Jia, Ales Leonardis, Greg Slabaugh, and Tinne Tuytelaars. A continual learning survey: Defying forgetting in classification tasks. IEEE Transactions on Pattern Analysis and Machine Intelligence, 2021.

18. Sebastian Farquhar and Yarin Gal. Towards Robust Evaluations of Continual Learning. Lifelong Learning: A Reinforcement Learning Approach Workshop at ICML, 2018.

19. Matthew Riemer, Ignacio Cases, Robert Ajemian, Miao Liu, Irina Rish, Yuhai Tu, and Gerald Tesauro. Learning to learn without forgetting by maximizing transfer and minimizing interference. In International Conference on Learning Representations, 2019.

20. Buzzega, P., Boschini, M., Porrello, A., Abati, D. and Calderara, S., 2020. Dark experience for general continual learning: a strong, simple baseline. Advances in neural information processing systems, 33, pp.15920-15930.

21. Olshausen, B.A. and Field, D.J., 2004. Sparse coding of sensory inputs. Current opinion in neurobiology, 14(4), pp.481-487.

22. Veit, A. and Belongie, S., 2018. Convolutional networks with adaptive inference graphs. In Proceedings of the European Conference on Computer Vision (ECCV) (pp. 3-18).

23. Wang, X., Yu, F., Dou, Z.Y., Darrell, T. and Gonzalez, J.E., 2018. Skipnet: Learning dynamic routing in convolutional networks. In Proceedings of the European Conference on Computer Vision (ECCV) (pp. 409-424).

24. Wu, Z., Nagarajan, T., Kumar, A., Rennie, S., Davis, L.S., Grauman, K. and Feris, R., 2018. Blockdrop: Dynamic inference paths in residual networks. In Proceedings of the IEEE Conference on Computer Vision and Pattern Recognition (pp. 8817-8826).

25. Jorge A Mendez and Eric Eaton. Lifelong learning of compositional structures. In International Conference on Learning Representations, 2021. URL https://openreview.net/forum?id=ADWd4TJO13G.

26. Ostapenko, O., Rodriguez, P., Caccia, M. and Charlin, L., 2021. Continual Learning via Local Module Composition. Advances in Neural Information Processing Systems, 34.

27. Tom Veniat, Ludovic Denoyer, and MarcAurelio Ranzato. Efficient continual learning with modular networks and task-driven priors. In International Conference on Learning Representations, 2021. URL https://openreview.net/forum?id=EKV158tSfwv.

28. Mark Collier, Efi Kokiopoulou, Andrea Gesmundo, and Jesse Berent. Routing networks with co-training for continual learning. arXiv preprint arXiv:2009.04381, 2020.

29. He, K., Zhang, X., Ren, S. and Sun, J., 2016. Deep residual learning for image recognition. In Proceedings of the IEEE conference on computer vision and pattern recognition (pp. 770-778).

30. Abati, D., Tomczak, J., Blankevoort, T., Calderara, S., Cucchiara, R. and Bejnordi, B.E., 2020. Conditional channel gated networks for task-aware continual learning. In Proceedings of the IEEE/CVF Conference on Computer Vision and Pattern Recognition (pp. 3931-3940).

31. Chen, H.J., Cheng, A.C., Juan, D.C., Wei, W. and Sun, M., 2020. Mitigating forgetting in online continual learning via instance-aware parameterization. Advances in Neural Information Processing Systems, 33, pp.17466-17477.

32. Jeffrey S Vitter. Random sampling with a reservoir. ACM Transactions on Mathematical Software (TOMS), 11(1):37-57, 1985

33. Yosinski, J., Clune, J., Bengio, Y., Lipson, H.: How transferable are features in deep neural networks? In: NeurIPS. pp. 3320-3328 (2014)

34. Davari, M., Asadi, N., Mudur, S., Aljundi, R. and Belilovsky, E., 2022. Probing Representation Forgetting in Supervised and Unsupervised Continual Learning. arXiv preprint arXiv:2203.13381.

35. Blalock, D., Gonzalez Ortiz, J.J., Frankle, J. and Guttag, J., 2020. What is the state of neural network pruning?. Proceedings of machine learning and systems, 2, pp.129-146.

36. Paik, I., Oh, S., Kwak, T. and Kim, I., 2020, April. Overcoming catastrophic forgetting by neuron-level plasticity control. In Proceedings of the AAAI Conference on Artificial Intelligence (Vol. 34, No. 04, pp. 5339-5346).

37. Golkar, S., Kagan, M. and Cho, K., 2019. Continual learning via neural pruning. arXiv preprint arXiv:1903.04476.

38. Hung, C.Y., Tu, C.H., Wu, C.E., Chen, C.H., Chan, Y.M. and Chen, C.S., 2019. Compacting, picking and growing for unforgetting continual learning. Advances in Neural Information Processing Systems, 32.

**Claims**

1. A computer-implemented method for general continual learning in deep neural networks comprising the steps of:

   providing a structure of said deep neural networks comprising a plurality of convolutional layers; and
   providing a memory buffer for storing data of network predictions;
   wherein, for each layer, the method comprises the steps of:

   selecting an input sample from current data and/or from data stored in the memory buffer;
   building at least one agent as self-attention network, wherein said at least one agent is arranged for processing said input sample to said layer and for emitting as many outputs as activations in said layer;
   converting said outputs into probabilities;
   converting said probabilities into binary actions to keep or to drop each activation using Bernoulli sampling;

and
rewarding the agent for using the activation when the network prediction is correct and penalizing the agent for using the activation when the network prediction is incorrect while incentivizing the retention of a desired ratio of activations at each layer.

2. The computer-implemented method of claim 1, further comprising the step of maintaining a constant-size memory buffer by updating said memory buffer using reservoir sampling.

3. The computer-implemented method of claim 2, wherein the step of updating said memory buffer is applied exclusively when the network predictions are correct.

4. The computer-implemented method of any one of claims 1 - 3, wherein when the neural network structure comprises a batch normalization layer, the method comprises the step of applying actions after said batch normalization layer.

5. The computer-implemented method of any one of claims 1 - 4, wherein the step of dropping each activation comprises the step of removing channels from the outputs of the convolutional layers.

6. The computer-implemented method of any one of claims 1 - 5, further comprising the steps of:

   estimating a channel-length representation by using pointwise convolution, batch normalization, and global average pooling;
   sending said estimated channel-length representation through a multilayer perceptron with one hidden layer and a Sigmoid activation; and
   multiplying said estimated channel-length representation with the original channel-length representation.

7. The computer-implemented method of any one of claims 1 - 6, further comprising the step of using a Sigmoid with a temperature.

8. The computer-implemented method of any one of claims 1 - 7, the method further comprising the step of calculating at least one task loss wherein a cross-entropy loss function is minimized and applied on current data and on data stored in the memory buffer.

9. The computer-implemented method of any one of claims 1 - 8, further comprising the step of calculating, for each agent, at least one agent loss comprising a reward function and a corresponding policy gradient loss function, wherein the reward function comprises the steps of:

   rewarding the agent for using the activation when the network prediction is correct,
   penalizing the agent for using the activation when the network prediction is incorrect and,
   incentivizing the retention of a desired ratio of activations at each layer;
   and wherein the corresponding policy gradient loss function comprises the steps of:

   passing an input of the layer through the self-attention network for providing an output of same size as the number of activations in said layer,
   using a probability layer for converting said output into probabilities,
   converting said probabilities into binary actions to keep or to drop each activation using Bernoulli sampling, and
   multiplying said actions by the activations in order to remove the activations to be dropped.

10. The computer-implemented method of any one of claims 1 - 9, further comprising the step of calculating at least two consistency losses applied on final representations of the network and on sub-networks of the agent, wherein for each consistency loss a mean squared error loss function is minimized for enforcing consistency.

11. The computer-implemented method of any one of claims 1 - 10, further comprising the step of calculating at least one prototype loss wherein a ratio of pairwise mean squared errors between representations of same classes to pairwise mean squared errors between representations from different classes is minimized, and wherein said prototype loss is applied on current data and on data stored in the memory buffer.

12. The computer-implemented method of any one of claims 1 - 11, further comprising the step of calculating at least one exploration loss wherein, for each agent, an entropy of action probabilities is maximized and wherein said exploration loss is applied on current data.

13. The computer-implemented method of claim 1, further comprising the step of calculating a total loss function for achieving continual learning by providing a weighted sum of at least one task loss, at least one agent loss, at least two consistency losses, at least one prototype loss, and at least one exploration loss, wherein:

the at least one task loss is calculated by minimizing a cross-entropy loss function and applying the cross-entropy loss function on current data and on data stored in the memory buffer;
the agent loss is calculated using a reward function and a corresponding policy gradient loss function for each agent, wherein the reward function comprises the steps of: rewarding the agent for using the activation when the network prediction is correct, penalizing the agent for using the activation when the network prediction is incorrect and incentivizing the retention of a desired ratio of activations at each layer; and wherein the corresponding policy gradient loss function comprises the steps of: passing an input of the layer through the self-attention network for providing an output of same size as the number of activations in said layer, using a probability layer for converting said output into probabilities, converting said probabilities into binary actions to keep or to drop each activation using Bernoulli sampling, and multiplying said actions by the activations in order to remove the activations to be dropped;
the at least two consistency losses are calculated by minimizing a mean squared error loss function for enforcing consistency, and applying the at least two consistency losses on final representations of the network and on sub-networks of the agent;
the prototype loss is calculated by minimizing a ratio of pairwise mean squared errors between representations of same classes to pairwise mean squared errors between representations from different classes, and applying the prototype loss on current data and on data stored in the memory buffer; and
the exploration loss is calculated by maximizing an entropy of action probabilities for each agent and applying the exploration loss on current data.

14. The computer-implemented method of claim 12, further comprising the step of multiplying the at least one exploration loss with a weight smaller than a weight of the at least one task loss, a weight of the at least one agent loss, a weight of the at least one consistency loss, and a weight of the at least one prototype loss.

15. The computer-implemented method of claim 8, further comprising the step of establishing a warmup stage of training for a plurality of initial epochs of a first task, wherein the at least one task loss is exclusively applied on current data and wherein remaining losses are excluded.

16. A computer-readable medium provided with a computer program, wherein, when said computer program is loaded and executed by a computer, said computer program causes the computer to carry out the steps of the computer-implemented method according to any one of claims 1 - 15.

17. A data processing system comprising a computer loaded with a computer program, wherein said program is arranged for causing the computer to carry out the steps of the computer-implemented method according to any one of claims 1 - 15.

18. The data processing system of claim 17, wherein the system is embodied with a neural network wherein the structure of said neural network comprises a ResNet architecture.

19. The data processing system of claim 17 or 18, wherein the neural network comprises four blocks wherein agents of a self-attention network are linked to convolutional layers of the last three of said blocks, wherein each block comprises two residual blocks and wherein each residual block comprises two convolutional layers.

**Amended claims in accordance with Rule 137(2) EPC.**

1. A computer-implemented method for general continual learning in deep neural networks comprising the steps of:

providing a structure of said deep neural networks comprising a plurality of convolutional layers; and
providing a memory buffer for storing data of network predictions;
wherein, for each layer, the method comprises the steps of:

selecting an input sample from current data and/or from data stored in the memory buffer;
building at least one self-attention network arranged for processing said input sample to said layer and for emitting as many outputs as activations in said layer;
converting said outputs into probabilities by using a probability layer;
converting said probabilities into binary actions to keep or to drop each activation using Bernoulli sampling; and
rewarding the agent for using the activation when the network prediction is correct and penalizing the agent for using the activation when the network prediction is incorrect while incentivizing the retention of a desired ratio of activations at each layer.

2. The computer-implemented method of claim 1, further comprising the step of maintaining a constant-size memory buffer by updating said memory buffer using reservoir sampling.

3. The computer-implemented method of claim 2, wherein the step of updating said memory buffer is applied exclusively when the network predictions are correct.

4. The computer-implemented method of any one of claims 1 - 3, wherein when the neural network structure comprises a batch normalization layer, the method comprises the step of applying the steps of any one of claim 1 - 3 after said batch normalization layer.

5. The computer-implemented method of any one of claims 1 - 4, wherein the step of dropping each activation comprises the step of removing channels from the outputs of the convolutional layers.

6. The computer-implemented method of any one of claims 1 - 5, further comprising the steps of:

   estimating a channel-length representation by using pointwise convolution, batch normalization, and global average pooling;
   sending said estimated channel-length representation through a multilayer perceptron with one hidden layer and a Sigmoid activation; and
   multiplying said estimated channel-length representation with the original channel-length representation.

7. The computer-implemented method of any one of claims 1 - 6, further comprising the step of using a Sigmoid with a temperature.

8. The computer-implemented method of any one of claims 1 - 7, the method further comprising the step of calculating at least one task loss wherein a cross-entropy loss function is minimized and applied on current data and on data stored in the memory buffer.

9. The computer-implemented method of any one of claims 1 - 8, further comprising the step of calculating, for each agent, at least one agent loss comprising a reward function and a corresponding policy gradient loss function, wherein the reward function comprises the steps of:

   rewarding the agent for using the activation when the network prediction is correct,
   penalizing the agent for using the activation when the network prediction is incorrect and,
   rewarding the retention of a desired ratio of activations at each layer;
   and wherein the corresponding policy gradient loss function comprises the steps of:

   passing an input of the layer through the self-attention network for providing an output of same size as the number of activations in said layer,
   using a probability layer for converting said output into probabilities,
   converting said probabilities into binary actions to keep or to drop each activation using Bernoulli sampling, and
   multiplying said actions by the activations in order to remove the activations to be dropped.

10. The computer-implemented method of any one of claims 1 - 9, further comprising the step of calculating at least two consistency losses applied on final representations of the network and on sub-networks of the agent, wherein for each consistency loss a mean squared error loss function is minimized for enforcing consistency.

11. The computer-implemented method of any one of claims 1 - 10, further comprising the step of calculating at least one prototype loss wherein a ratio of pairwise mean squared errors between representations of same classes to pairwise mean squared errors between representations from different classes is minimized, and wherein said prototype loss is applied on current data and on data stored in the memory buffer.

12. The computer-implemented method of any one of claims 1 - 11, further comprising the step of calculating at least one exploration loss wherein, for each agent, an entropy of action probabilities is maximized and wherein said exploration loss is applied on current data.

13. The computer-implemented method of claim 1, further comprising the step of calculating a total loss function for achieving continual learning by providing a weighted sum of at least one task loss, at least one agent loss, at least two consistency losses, at least one prototype loss, and at least one exploration loss, wherein:

the at least one task loss is calculated by minimizing a cross-entropy loss function and applying the cross-entropy loss function on current data and on data stored in the memory buffer;
the agent loss is calculated using a reward function and a corresponding policy gradient loss function for each agent, wherein the reward function comprises the steps of: rewarding the agent for using the activation when the network prediction is correct, penalizing the agent for using the activation when the network prediction is incorrect and incentivizing the retention of a desired ratio of activations at each layer; and wherein the corresponding policy gradient loss function comprises the steps of: passing an input of the layer through the self-attention network for providing an output of same size as the number of activations in said layer, using a probability layer for converting said output into probabilities, converting said probabilities into binary actions to keep or to drop each activation using Bernoulli sampling, and multiplying said actions by the activations in order to remove the activations to be dropped;
the at least two consistency losses are calculated by minimizing a mean squared error loss function for enforcing consistency, and applying the at least two consistency losses on final representations of the network and on sub-networks of the agent;
the prototype loss is calculated by minimizing a ratio of pairwise mean squared errors between representations of same classes to pairwise mean squared errors between representations from different classes, and applying the prototype loss on current data and on data stored in the memory buffer; and
the exploration loss is calculated by maximizing an entropy of action probabilities for each agent and applying the exploration loss on current data.

14. The computer-implemented method of claim 12, further comprising the step of multiplying the at least one exploration loss with a weight smaller than a weight of the at least one task loss, a weight of the at least one agent loss, a weight of the at least one consistency loss, and a weight of the at least one prototype loss.

15. The computer-implemented method of claim 8, further comprising the step of establishing a warmup stage of training for a plurality of initial epochs of a first task, wherein the at least one task loss is exclusively applied on current data and wherein remaining losses are excluded.

16. A computer-readable medium provided with a computer program, wherein, when said computer program is loaded and executed by a computer, said computer program causes the computer to carry out the steps of the computer-implemented method according to any one of claims 1 - 15.

17. A data processing system comprising a computer loaded with a computer program, wherein said program is arranged for causing the computer to carry out the steps of the computer-implemented method according to any one of claims 1-15.

18. The data processing system of claim 17, wherein the system is configured to use a neural network wherein the structure of said neural network comprises a ResNet architecture.

19. The data processing system of claim 17 or 18, wherein the neural network comprises four blocks wherein agents of a self-attention network are linked to convolutional layers of the last three of said blocks, wherein each block comprises two residual blocks and wherein each residual block comprises two convolutional layers.

Fig. 1

EP 4 287 073 A1

Fig. 2

**EP 4 287 073 A1**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONGQIU WU ET AL: "Not All Attention Is All You Need", ARXIV.ORG, CORNELL UNIVERSITY LIBRARY, 201 OLIN LIBRARY CORNELL UNIVERSITY ITHACA, NY 14853, 1 June 2021 (2021-06-01), XP081980715, * page 1 – page 8 * | 1-19 | INV. G06N3/04 G06N3/08 |
| A | SHEN CHEN ET AL: "Sharp Attention Network via Adaptive Sampling for Person Re-Identification", IEEE TRANSACTIONS ON CIRCUITS AND SYSTEMS FOR VIDEO TECHNOLOGY, IEEE, USA, vol. 29, no. 10, 10 October 2019 (2019-10-10), pages 3016-3027, XP011748644, ISSN: 1051-8215, DOI: 10.1109/TCSVT.2018.2872503 [retrieved on 2019-10-01] * the whole document * | 1-19 | |
| A | ZHANPENG ZENG ET AL: "You Only Sample (Almost) Once: Linear Cost Self-Attention Via Bernoulli Sampling", ARXIV.ORG, CORNELL UNIVERSITY LIBRARY, 201 OLIN LIBRARY CORNELL UNIVERSITY ITHACA, NY 14853, 18 November 2021 (2021-11-18), XP091102581, * the whole document * | 1-19 | **TECHNICAL FIELDS SEARCHED (IPC)**<br><br>G06N |

-/--

The present search report has been drawn up for all claims

| Place of search | Date of completion of the search | Examiner |
|---|---|---|
| The Hague | 19 December 2022 | Volkmer, Markus |

EPO FORM 1503 03.82 (P04C01)

Europäisches
Patentamt
European
Patent Office
Office européen
des brevets

**EUROPEAN SEARCH REPORT**

Application Number

EP 22 18 2588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN ZEHUI ET AL: "DropAttention: A Regularization Method for Fully-Connected Self-Attention Networks", ARXIV.ORG, CORNELL UNIVERSITY LIBRARY, 201 OLIN LIBRARY CORNELL UNIVERSITY ITHACA, NY 14853, 25 July 2019 (2019-07-25), XP081448888, * the whole document * | 1-19 | |
| A | ANDREA ZUNINO ET AL: "Excitation Dropout: Encouraging Plasticity in Deep Neural Networks", ARXIV.ORG, CORNELL UNIVERSITY LIBRARY, 201 OLIN LIBRARY CORNELL UNIVERSITY ITHACA, NY 14853, 23 May 2018 (2018-05-23), XP080881479, * the whole document * | 1-19 | |
| A | Zuxuan Wu ET AL: "BlockDrop: Dynamic Inference Paths in Residual Networks", arXiv:1711.08393v3, 12 April 2018 (2018-04-12), XP055618043, DOI: 10.1109/CVPR.2018.00919 Retrieved from the Internet: URL:https://arxiv.org/abs/1711.08393v3 [retrieved on 2019-09-03] * the whole document * | 1-19 | TECHNICAL FIELDS SEARCHED (IPC) |

The present search report has been drawn up for all claims

| Place of search | Date of completion of the search | Examiner |
|---|---|---|
| The Hague | 19 December 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2032027 A

**Non-patent literature cited in the description**

- **NOAH F GREENWALD ; GENEVA MILLER ; ERICK MOEN ; ALEX KONG ; ADAM KAGEL ; THOMAS DOUGHERTY ; CHRISTINE CAMACHO FULLAWAY ; BRIANNA J MCINTOSH ; KE XUAN LEOW ; MORGAN SARAH SCHWARTZ et al.** Whole-cell segmentation of tissue images with human-level performance using large-scale data annotation and deep learning. *Nature biotechnology,* 2021, 1-11
- **YANIV TAIGMAN ; MING YANG ; MARC'AURELIO RANZATO ; LIOR WOLF.** Deepface: Closing the gap to human-level performance in face verification. *Proceedings of the IEEE conference on computer vision and pattern recognition,* 2014, 1701-1708
- **RAIA HADSELL ; DUSHYANT RAO ; ANDREI A RUSU ; RAZVAN PASCANU.** Embracing change: Continual learning in deep neural networks. *Trends in cognitive sciences,* 2020, vol. 24 (12), 1028-1040
- **ROBERT M FRENCH.** Catastrophic forgetting in connectionist networks. *Trends in cognitive sciences,* 1999, vol. 3 (4), 128-135
- **THRUN, S. ; MITCHELL, T.M.** Lifelong robot learning. *Robotics and autonomous systems,* 1995, vol. 15 (1-2), 25-46
- A study on a lane keeping system using CNN for online learning of steering control from real time images. **NOSE, YOHEI ; AKIRA KOJIMA ; HIDEYUKI KAWABATA ; TETSUO HIRONAKA.** In 2019 34th International Technical Conference on Circuits/Systems, Computers and Communications (ITC-CSCC). IEEE, 2019, 1-4
- Catastrophic interference in connectionist networks: The sequential learning problem. **MICHAEL MCCLOSKEY ; NEAL J COHEN.** Psychology of learning and motivation. Elsevier, 1989, vol. 24, 109-165

- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526
- Progress & compress: A scalable framework for continual learning. **JONATHAN SCHWARZ ; WOJCIECH CZARNECKI ; JELENA LUKETINA ; AGNIESZKA GRABSKA-BARWINSKA ; YEE WHYE TEH ; RAZVAN PASCANU ; RAIA HADSELL.** International Conference on Machine Learning. PMLR, 2018, 4528-4537
- Continual learning through synaptic intelligence. **FRIEDEMANN ZENKE ; BEN POOLE ; SURYA GANGULI.** International Conference on Machine Learning. PMLR, 2017, 3987-3995
- **CLAUDIA CLOPATH ; LORRIC ZIEGLER ; ELENI VASILAKI ; LARS BÜSING ; WULFRAM GERSTNER.** Tag-trigger-consolidation: a model of early and late long-term-potentiation and depression. *PLoS computational biology,* 2008, vol. 4 (12), e1000248
- **YOON, J. ; YANG, E. ; LEE, J. ; HWANG, S.J.** Lifelong learning with dynamically expandable networks. *arXiv:1708.0154,* 2017
- **TAMEEM ADEL ; HAN ZHAO ; RICHARD E. TURNER.** Continual learning with adaptive weights (CLAW). *8th International Conference on Learning Representations, ICLR 2020, Addis Ababa, Ethiopia,* 26 April 2020, https://openreview.net/forum?id=Hklso24Kwr
- **DAVID LOPEZ-PAZ ; MARC'AURELIO RANZATO.** Gradient episodic memory for continual learning. *Advances in neural information processing systems,* 2017, 6467-6476
- Efficient lifelong learning with A-GEM. **ARSLAN CHAUDHRY ; MARC'AURELIO RANZATO ; MARCUS ROHRBACH ; MOHAMED ELHOSEINY.** 7th International Conference on Learning Representations. ICLR, 06 May 2019

- Learning Fast, Learning Slow: A General Continual Learning Method based on Complementary Learning System. **ELAHE ARANI ; FAHAD SARFRAZ ; BAHRAM ZONOOZ.** Tenth International Conference on Learning Representations. ICLR, 2022
- **MATTHIAS DELANGE ; RAHAF ALJUNDI ; MARC MASANA ; SARAH PARISOT ; XU JIA ; ALES LEONARDIS ; GREG SLABAUGH ; TINNE TUYTELAARS.** A continual learning survey: Defying forgetting in classification tasks. *IEEE Transactions on Pattern Analysis and Machine Intelligence,* 2021
- **SEBASTIAN FARQUHAR ; YARIN GAL.** Towards Robust Evaluations of Continual Learning. *Lifelong Learning: A Reinforcement Learning Approach Workshop at ICML,* 2018
- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *International Conference on Learning Representations,* 2019
- **BUZZEGA, P. ; BOSCHINI, M. ; PORRELLO, A. ; ABATI, D. ; CALDERARA, S.** Dark experience for general continual learning: a strong, simple baseline. *Advances in neural information processing systems,* 2020, vol. 33, 15920-15930
- **OLSHAUSEN, B.A. ; FIELD, D.J.** Sparse coding of sensory inputs. *Current opinion in neurobiology,* 2004, vol. 14 (4), 481-487
- **VEIT, A. ; BELONGIE, S.** Convolutional networks with adaptive inference graphs. *Proceedings of the European Conference on Computer Vision (ECCV),* 2018, 3-18
- **WANG, X. ; YU, F. ; DOU, Z.Y. ; DARRELL, T. ; GONZALEZ, J.E.** Skipnet: Learning dynamic routing in convolutional networks. *Proceedings of the European Conference on Computer Vision (ECCV),* 2018, 409-424
- **WU, Z. ; NAGARAJAN, T. ; KUMAR, A. ; RENNIE, S. ; DAVIS, L.S. ; GRAUMAN, K. ; FERIS, R.** Blockdrop: Dynamic inference paths in residual networks. *Proceedings of the IEEE Conference on Computer Vision and Pattern Recognition,* 2018, 8817-8826
- **JORGE A MENDEZ ; ERIC EATON.** Lifelong learning of compositional structures. *International Conference on Learning Representations,* 2021, https://openreview.net/forum?id=ADWd4TJO13G
- **OSTAPENKO, O. ; RODRIGUEZ, P. ; CACCIA, M. ; CHARLIN, L.** Continual Learning via Local Module Composition. *Advances in Neural Information Processing Systems,* 2021, vol. 34
- **TOM VENIAT ; LUDOVIC DENOYER ; MARCAURELIO RANZATO.** Efficient continual learning with modular networks and task-driven priors. *International Conference on Learning Representations,* 2021, https://openreview.net/forum?id=EKV158tSfwv
- **MARK COLLIER ; EFI KOKIOPOULOU ; ANDREA GESMUNDO ; JESSE BERENT.** Routing networks with co-training for continual learning. *arXiv:2009.04381,* 2020
- **HE, K. ; ZHANG, X. ; REN, S. ; SUN, J.** Deep residual learning for image recognition. *Proceedings of the IEEE conference on computer vision and pattern recognition,* 2016, 770-778
- **ABATI, D. ; TOMCZAK, J. ; BLANKEVOORT, T. ; CALDERARA, S. ; CUCCHIARA, R. ; BEJNORDI, B.E.** Conditional channel gated networks for task-aware continual learning. *Proceedings of the IEEE/CVF Conference on Computer Vision and Pattern Recognition,* 2020, 3931-3940
- **CHEN, H.J. ; CHENG, A.C. ; JUAN, D.C. ; WEI, W. ; SUN, M.** Mitigating forgetting in online continual learning via instance-aware parameterization. *Advances in Neural Information Processing Systems,* 2020, vol. 33, 17466-17477
- **JEFFREY S VITTER.** Random sampling with a reservoir. *ACM Transactions on Mathematical Software (TOMS),* 1985, vol. 11 (1), 37-57
- **YOSINSKI, J. ; CLUNE, J. ; BENGIO, Y. ; LIPSON, H.** How transferable are features in deep neural networks?. *NeurIPS,* 2014, 3320-3328
- **DAVARI, M. ; ASADI, N. ; MUDUR, S. ; ALJUNDI, R. ; BELILOVSKY, E.** Probing Representation Forgetting in Supervised and Unsupervised Continual Learning. *arXiv:2203.13381,* 2022
- **BLALOCK, D. ; GONZALEZ ORTIZ, J.J. ; FRANKLE, J. ; GUTTAG, J.** What is the state of neural network pruning?. *Proceedings of machine learning and systems,* 2020, vol. 2, 129-146
- **PAIK, I. ; OH, S. ; KWAK, T. ; KIM, I.** Overcoming catastrophic forgetting by neuron-level plasticity control. *Proceedings of the AAAI Conference on Artificial Intelligence,* April 2020, vol. 34 (04), 5339-5346
- **GOLKAR, S. ; KAGAN, M. ; CHO, K.** Continual learning via neural pruning. *arXiv:1903.04476,* 2019
- **HUNG, C.Y. ; TU, C.H. ; WU, C.E. ; CHEN, C.H. ; CHAN, Y.M. ; CHEN, C.S.** Compacting, picking and growing for unforgetting continual learning. *Advances in Neural Information Processing Systems,* 2019, vol. 32